# EUROPÄISCHE PATENTSCHRIFT

(11) **EP 1 337 686 B1**
(45) Veröffentlichungstag und Bekanntmachung des Hinweises auf die Patenterteilung: **14.03.2007**
(21) Anmeldenummer: 01985345.6
(22) Anmeldetag: 29.11.2001
(51) Int. Cl.: C23C 30/00, C03B 5/167, C03B 40/00

(54) **BESCHICHTETES EDELMETALLTEIL IN DER GLASHERSTELLUNG**
COATED NOBLE METAL ELEMENT USED FOR PRODUCING GLASS
ELEMENT METALLIQUE NOBLE REVETU DESTINE A LA FABRICATION DE VERRE

(30) Priorität: 30.11.2000 DE 10059581
(43) Veröffentlichungstag der Anmeldung: 27.08.2003
(60) Teilanmeldung: 06016886.1
(73) Patentinhaber: Schott AG, 55122 Mainz (DE)
(72) Erfinder: OTT, Franz, 95666 Mitterteich (DE); GOHLKE, Dirk, 40670 Meerbursch (DE); WITTE, Jörg, 64295 Darmstadt (DE)
(74) Vertreter: Fuchs Mehler Weiss & Fritzsche
(86) Internationale Anmeldenummer: PCT/EP2001/013938
(87) Internationale Veröffentlichungsnummer: WO 2002/044115

(56) Entgegenhaltungen:
- EP-A- 0 679 733
- DE-A- 4 038 254
- GB-A- 641 299
- US-A- 2 947 114
- US-A- 3 248 206
- US-A- 4 487 841
- US-A- 4 532 184
- US-A- 5 955 197
- DATABASE WPI Section Ch, Week 198706 Derwent Publications Ltd., London, GB; Class K05, AN 1987-039296 XP002199077 & JP 61 294389 A (TOSHIBA KK), 25. Dezember 1986 (1986-12-25)
- PATENT ABSTRACTS OF JAPAN vol. 013, no. 501 (C-652), 10. November 1989 (1989-11-10) & JP 01 201033 A (CANON INC), 14. August 1989 (1989-08-14)

## Beschreibung

Die Erfindung betrifft ein beschichtetes Metallteil in der Glasherstellung und ein Verfahren zum Beschichten von Metallteilen, insbesondere auf mit einer Glasschmelze einseitig beaufschlagte Metallteile sowie Anwendungen dieser beschichteten Metallteile in der Herstellung und Verarbeitung von Glas.

In der glasverarbeitenden Industrie werden für den Umgang mit Glasschmelzen im Produktions- und Fertigungsbereich in vielen Fällen Behälter, Transportmittel und Werkzeuge wegen der Temperatur- und Oxidationsbeständigkeit aus Edelmetallen der Platingruppe (Platin, Palladium, Rhodium, Iridium) sowie Legierungen dieser Metalle untereinander oder mit Gold gefertigt. Bei Vorrichtungen, bei denen es sinnvoll erscheint, werden die mit der Glasschmelze beaufschlagten Kontaktflächen mit den Metallen der genannten Art beschichtet oder mit einer aus diesen Metallen gefertigten Verkleidung versehen. Ein Beispiel hierfür ist die mit einer Platinauskleidung ausgestattete Speiserrinne, die Teil einer Glasschmelzvorrichtung ist und in der Regel zum Transport von flüssigem Glas von einer Schmelzeinrichtung zu einer Verarbeitungseinrichtung sowie zur Konditionierung des Glases benötigt wird.

Glasschmelzen enthalten stets einen gewissen Wasseranteil, der seinen Ursprung in den für die Glasschmelze verwendeten Rohstoffen hat, die das in ihnen gebundene Wasser mit in den Produktionsprozess bringen. Aber auch die die Glasschmelze umgebende Atmosphäre und das in ihr enthaltene Wasser sind zu berücksichtigen. Dies gilt besonders für die wasserreiche Ofenatmosphäre bei Oxyfuel-befeuerten Schmelzwannen, bei denen der Wassergehalt im Glas um bis zu 50% gegenüber nicht Oxyfuel - befeuerten Wannen ansteigen kann.

In Abhängigkeit von der tatsächlich vorliegenden Temperatur dissoziiert Wasser in einer Glasschmelze an Platinmetallen zu einem gewissen Prozentsatz in Wasserstoff und Sauerstoff. Eine weitere Ursache für die Wasserdissoziation beruht auf der Elektrolyse, welche durch einen durch das Glas fließenden elektrischen Strom induziert wird. Ein elektrischer Strom wird beispielsweise dann in das Glas eingebracht, wenn eine Beheizung mit Elektroden stattfindet. Während der Wasserstoff durch die Platinmetalle hindurch diffundieren kann, ist dies für den im Glas gebildeten Sauerstoff nicht möglich. Die Diffusion des H₂ und die damit verbundene Abnahme der H₂-Konzentration im Glas bewirkt, dass bei der Wasserdissoziation kein Gleichgewichtszustand erreicht wird. Der durch das Metall hindurch diffundierte Wasserstoff wird über die Luft abtransportiert. Der Sauerstoff reichert sich an der Grenzschicht zum Platinkontakt an, bis die O₂-Konzentration die Löslichkeitsgrenze bei einem O₂-Partialdruck von etwa 1 bar überschritten hat und sich O₂-haltige Blasen bilden. Die Blasen wachsen durch Eindiffundieren von SO₂, N₂, CO₂ und anderen im Glas physikalisch gelösten Gasen, werden durch den Glasstrom weggetragen und gelangen in das zu fertigende Produkt. Dadurch kann die Qualität der erzeugten Glasprodukte erheblich beeinträchtigt werden.

Betroffen sind davon vor allem Borosilikatgläser, Aluminosilikatgläser und Glaskeramiken. Bei den Borosilikatgläsern neigen die für Pharmazie, Technik und Chemie wichtigen Neutralgläser, aber auch viele andere Borosilikatgläser, die nicht zur Gruppe der Neutralgläser gehören, besonders stark zur Bildung von O₂-Blasen. Bei den Aluminosilikatgläsern sind vor allem Gläser betroffen, die bei Displayanwendungen und bei thermisch hochbelasteten Lampen zum Einsatz kommen. Darüber hinaus neigen alle Gläser, die keine ausreichend hohe Konzentration an polyvalenten Ionen enthalten und nicht hinreichend ausgeläutert sind, zur Bildung von O₂-Blasen an Platinoberflächen.

Aus dem Patent US-A-5,785,726 ist bekannt, dass Behälter aus Platin oder Platinlegierungen durch Spülung mit wasserstoff- oder wasserdampfhaltiger Atmosphäre vor der Entstehung von elektrochemisch gebildeten O₂-Blasen geschützt werden können.

Aus WO 98/18731 ist bekannt, die Blasenbildung in der Kontaktzone zwischen Glasschmelze und Platin oder Molybdän dadurch zu vermindern, dass H₂ auf der der Glasschmelze abgewandten Seite vorhanden ist. Der H₂-Partialdruck von außen verhindert das Diffundieren von H₂ aus der Schmelze durch Platin.

Die bekannten Verfahren sind aufwändig. Sie müssen überwacht und gesteuert werden. Bei Störungen der Steuerung und Regelung der Begasung entstehen Produktionsausfälle.

In US 3109045 wird ein Schmelztiegel aus Molybdän, Wolfram, Platin, Eisen oder Widerstandslegierungen zum Schmelzen und Läutern von Glas aus Gemenge beschrieben, der in flüssiges Glas eingetaucht wird, um den Zutritt von Luft zu verhindern und ihn somit vor atmosphärischem Angriff und vor Oxidation zu schützen. Dies ist eine Methode, um Schmelztiegel aus Refraktärmetallen wie z. B. Molybdän und Wolfram, die nicht oxidationsbeständig sind, einsetzen zu können. Diese Vorrichtung ist für das Schmelzen von Hochtemperaturgläsern und von hochkieselsäurehaltigen Gläsern mit niedriger thermischer Ausdehnung geeignet. Sie kann aber auch zum Schmelzen von Gläsern mit niedrigerer Schmelztemperatur eingesetzt werden.

Mit einem ganz anderen Problem beschäftigt sich die US 4,532,184. Darin wird vorgeschlagen, Edelmetallteile mit einer glashaltigen Beschichtung zu versehen. Diese Beschichtung soll das Problem des Abdampfens von Edelmetall im Betrieb reduzieren.

Die Aufgabe der Erfindung liegt darin, ein Metallteil aus Edelmetall für die Glasherstellung bereitzustellen, an dem die Bildung von O₂-Blasen wirksam unterbunden werden kann. Die Aufgabe der vorliegenden Erfindung liegt insbesondere darin, Vorrichtungen und Einrichtungen aus Edelmetallen zum Konditionieren, Homogenisieren, Verteilen, Beheizen und Formgeben von geschmolzenem Glas bereit zu stellen. Eine weitere Aufgabe der Erfindung liegt darin, ein Verfahren zur Herstellung von Glas bereitzustellen, bei dem die Bildung von O₂-Blasen wirksam unterbunden werden kann.

Die Aufgabe der vorliegenden Erfindung wird durch ein bereichsweise beschichtetes Edelmetall zur Verwendung in der Glasherstellung gelöst, bei der ein unbeschichteter Bereich des Edelmetallteiles mit einer Glasschmelze in Kontakt steht, das an der der Glasschmelze abgewandten Seite eine H₂ oder H₂ und O₂ undurchlässige Schicht aufweist, die eine Schichtdicke größer gleich 1 mm aufweist, temperaturbeständig ist, elastisch, flüssig oder fest ist, und mindestens ein Glas oder ein Glasgemisch, teilweise oder ganz auskristallisiertes oder keramisches Material enthält.

Edelmetalle aus der Platingruppe oder deren Legierungen sind auch bei hohen Temperaturen oxidationsbeständig. Ihr Einsatz für diesen Verwendungszweck ist Stand der Technik. Diese Vorrichtungen - so fern sie zum Transportieren von flüssigem Glas dienen - werden gewöhnlich in keramisches Isoliermaterial und mit keramischen Mörtel- und Vergussmassen eingemauert. Bei Vorrichtungen zur Formgebung von geschmolzenem Glas wird ein Kern - z. B. ein Schaft für eine Rohrziehnadel oder ein Zylinder für eine Dannerpfeife -, der teilweise oder ganz aus Keramik besteht, mit Edelmetall überzogen.

Für diese Vorrichtungen aus Platinmetallen ist vorgesehen, diese mit einer H₂ oder H₂ und O₂ dichten Schicht zu versehen. Dabei soll nicht die Oxidation der Platinmetalle, sondern die Diffusion des Wasserstoffs, der bei dem Dissoziationsprozess des Wassers im Glas an der Grenzschicht Edelmetallbeaufschlagtes Glas entsteht, durch das Edelmetall verhindert werden.

Der Ausdruck H₂ oder H₂ und O₂ undurchlässig bedeutet im Sinne der Erfindung, dass das Ungleichgewicht zwischen den in der Glasschmelze gelösten Gasen H₂ und O₂ oder deren Ionen durch Diffusion von H₂ durch die Schicht nur so groß werden kann, dass der O₂-Partialdruck unterhalb der Löslichkeitsgrenze des O₂ gehalten wird, so dass sich keine O₂-haltigen Blasen am Kontakt Glasschmelze/Metall bilden.

Eine bevorzugte Ausgestaltung der Erfindung ist ein beschichtetes Metallteil, wobei die H₂ oder H₂ und O₂ undurchlässige Schicht mindestens ein Glas mit der Zusammensetzung enthält:

| | |
|---|---|
| SiO₂ | 40 bis 99 Gew.-% |
| Al₂O₃ | 1 bis 30 Gew.-% |
| B₂O₃ | 0 bis 30 Gew.-% |
| BaO | 0 bis 15 Gew.-% |
| CaO | 0 bis 20 Gew.-% |
| MgO | 0 bis 8 Gew.-% |
| ZrO₂ | 0 bis 5 Gew.-% |
| Σ R₂O | 0 bis 25 Gew.-% |
| P₂O₅ | 0 bis 10 Gew.-% |
| Cr₂O₃ | 0 bis 3 Gew.-% |
| TiO₂ | 0 bis 10 Gew.-% |
| Fe₂O₃ | 0 bis 10 Gew.-% |
| ZnO | 0 bis 5 Gew.-% |
| MnO | 0 bis 10 Gew-% |
| SrO | 0 bis 10 Gew-% |
| PbO | 0 bis 70 Gew-% |
| Fluor | 0 bis 1 Gew.-% |

wobei Σ R₂O die Summe aller Alkalioxide, insbesondere die Summe aus Li₂O, Na₂O, K₂O und Cs₂O ist.

Ferner können noch andere Komponenten wie z. B. Sb₂O₃, As₂O₃, Cl⁻, SO₃, Oxide der Seltenen Erden, färbende Oxide aus den Nebengruppenelementen und weitere in Gläsern vorkommende Komponenten enthalten sein.

Eine andere bevorzugte Ausgestaltung der Erfindung ist ein beschichtetes Metallteil, wobei die H₂ oder H₂ und O₂ undurchlässige Schicht mindestens ein Glas mit der Zusammensetzung enthält:

| | |
|---|---|
| SiO₂ | 55 bis 70 Gew.-% |
| Al₂O₃ | 10 bis 30 Gew.-% |
| B₂O₃ | 0 bis 15 Gew.-% |
| BaO | 5 bis 15 Gew.-% |
| CaO | 3 bis 15 Gew.-% |
| MgO | 0 bis 8 Gew.-% |
| SrO | 0 bis 10 Gew-% |
| ZrO₂ | 0 bis 2 Gew.-% |
| Σ R₂O | 0 bis 5 Gew.-% |
| P₂O₅ | 0 bis 10 Gew.-% |
| Cr₂O₃ | 0 bis 1 Gew.-% |
| TiO₂ | 0 bis 1 Gew.-% |
| Fe₂O₃ | 0 bis 1 Gew.-% |
| ZnO | 0 bis 1 Gew.-% |

wobei Σ R₂O die Summe aller Alkalioxide, insbesondere die Summe aus Li₂O, Na₂O, K₂O und Cs₂O ist.

Eine andere bevorzugte Ausgestaltung der Erfindung ist ein beschichtetes Metallteil, wobei die H₂ oder H₂ und O₂ undurchlässige Schicht mindestens ein Glas mit der Zusammensetzung enthält:

| | |
|---|---|
| SiO₂ | 70 bis 85 Gew.-% |
| Al₂O₃ | 1 bis 8 Gew.-% |
| B₂O₃ | 5 bis 25 Gew.-% |
| BaO | 0 bis 5 Gew.-% |
| CaO | 0 bis 3 Gew.-% |
| MgO | 0 bis 3 Gew.-% |
| ZrO₂ | 0 bis 2 Gew.-% |
| *Σ-* R₂O | 3 bis 15 Gew.-% |
| P₂O₅ | 0 bis 2 Gew.-% |
| Cr₂O₃ | 0 bis 2 Gew.-% |
| TiO₂ | 0 bis 6 Gew.-% |
| MnO | 0 bis 6 Gew-% |
| Fe₂O₃ | 0 bis 5 Gew.-% |
| ZnO | 0 bis 2 Gew.-% |
| Fluor | 0 bis 0,5 Gew.-% |

wobei Σ R₂O die Summe aller Alkalioxide, insbesondere die Summe aus Li₂O, Na₂O, K₂O und Cs₂O ist.

Eine andere bevorzugte Ausgestaltung der Erfindung ist ein beschichtetes Metallteil, wobei die H₂ oder H₂ und O₂ undurchlässige Schicht mindestens ein Glas mit der Zusammensetzung enthält:

| | |
|---|---|
| SiO₂ | 65 bis 75 Gew.-% |
| Al₂O₃ | 2 bis 6 Gew.-% |
| B₂O₃ | 0 bis 3 Gew.-% |
| BaO | 0 bis 5 Gew.-% |
| CaO | 2 bis 7 Gew.-% |
| MgO | 0 bis 5 Gew.-% |
| ZrO₂ | 0 bis 1 Gew.-% |
| Σ R₂O | 10 bis 20 Gew.-% |
| P₂O₅ | 0 bis 5 Gew.-% |
| Cr₂O₃ | 0 bis 1 Gew.-% |
| TiO₂ | 0 bis 1 Gew.-% |
| Fe₂O₃ | 0 bis 5 Gew.-% |
| Fluor | 0 bis 1 Gew-% |
| ZnO | 0 bis 1 Gew.-% |

wobei Σ R₂O die Summe aller Alkalioxide, insbesondere die Summe aus Li₂O, Na₂O, K₂O und Cs₂O ist.

Eine andere bevorzugte Ausgestaltung der Erfindung ist ein beschichtetes Metallteil, wobei die H₂ oder H₂ und O₂ undurchlässige Schicht mindestens ein Glas mit der Zusammensetzung enthält:

| | |
|---|---|
| SiO₂ | 55 bis 75 Gew.-% |
| Al₂O₃ | 15 bis 25 Gew.-% |
| B₂O₃ | 0 bis 3 Gew.-% |
| BaO | 0 bis 5 Gew.-% |
| ZnO | 0 bis 3 Gew.-% |
| MgO | 0 bis 2 Gew.-% |
| ZrO₂ | 0 bis 3 Gew.-% |
| Σ R₂O | 1 bis 7 Gew.-% |
| P₂O₅ | 0 bis 5 Gew.-% |
| Cr₂O₃ | 0 bis 1 Gew.-% |
| TiO₂ | 0 bis 5 Gew.-% |
| Fe₂O₃ | 0 bis 5 Gew.-% |

wobei Σ R₂O die Summe aller Alkalioxide, insbesondere die Summe aus Li₂O, Na₂O, K₂O und Cs₂O ist.

Ferner können Zusätze von As₂O₃, Sb₂O₃ und färbende Komponenten von je 0 bis 3 Gew-% enthalten sein.

Eine besonders bevorzugte Ausgestaltung der Erfindung ist ein beschichtetes Metallteil, wobei die H₂ oder H₂ und O₂ undurchlässige Schicht aus dem gleichen Glas besteht wie das Glas, das mit dem so beschichteten Metallteil transportiert, konditioniert, geformt oder verarbeitet wird.

Eine bevorzugte Ausgestaltung der Erfindung ist ein beschichtetes Metallteil, wobei die H₂ oder H₂ und O₂ undurchlässige Schicht eine Dicke von 1 bis 10 mm aufweist, aber auch noch größer sein kann.

Eine bevorzugte Ausgestaltung der Erfindung ist ein beschichtetes Metallteil, wobei das für die H₂ oder H₂ und O₂ undurchlässige Schicht eingesetzte Material eine Viskosität von 10 bis 10⁸ dPas, bevorzugt 10² bis 10⁶ dPas aufweist.

Eine bevorzugte Ausgestaltung der Erfindung ist ein beschichtetes Metallteil, wobei das für die H₂ oder H₂ und O₂ undurchlässige Schicht eingesetzte Material aus Glasgrieß oder Glasscherben hergestellt wird, die mit gemahlener Keramik gemischt sind. Die Keramikkörner können grob oder fein gemahlen sein, wobei die Körnung und Korngrößenverteilung dem bestimmungsgemä-ßenen Einsatz entsprechend ausgewählt werden kann.

Eine bevorzugte Ausgestaltung der Erfindung ist ein beschichtetes Metallteil, wobei die H₂ oder H₂ und O₂ undurchlässige Schicht aus einer keramischen Masse besteht, der ein Glasgrieß beigemischt ist. Die Korngröße des Glasgrießes beträgt bevorzugt < 10 mm, besonders bevorzugt < 1 mm.

Eine bevorzugte Ausgestaltung der Erfindung ist ein beschichtetes Metallteil, das mindestens ein Metall aus der Gruppe Rhodium, Iridium, Palladium oder Platin oder eine Legierung oder Verbindung mit mindestens einem dieser Metalle oder mit Gold oder feinkornstabilisierte Edelmetalle enthält.

Eine bevorzugte Ausgestaltung der Erfindung ist ein beschichtetes Metallteil, das mit keramischem Mauerwerk thermisch isoliert ist, bei dem ein Spalt zwischen Metallteil und Keramik besteht und das ein oder mehrere Stützelemente aufweist. Damit wird das beschichtete Metallteil mechanisch entlastet und kann sich nicht deformieren. Gleichzeitig wird gewährleistet, dass der Spalt dauerhaft erhalten bleibt. Zwischen den Stützelementen sind hinreichend große Öffnungen vorgesehen, damit das Beschichtungsmedium, wie zum Beispiel Glas, ungehindert fließen und die Luft herausgedrückt werden kann.

Die Stützelemente können aus Metall oder Keramik bestehen. Die Keramik entspricht der Keramik, wie sie gewöhnlich in der Glasindustrie als Isoliermaterial oder als Konstruktionsmaterial für den Wannenbau verwendet wird und eine hinreichend hohe Temperaturbeständigkeit aufweist. Besonders eignen sich hierfür handelsübliche Keramikarten, die für den Kontakt mit schmelzflüssigem Glas vorgesehen sind. Die metallischen Stützelemente bestehen aus temperaturbeständigen Metallen und bevorzugt aus dem gleichen Metall wie das zu beschichtende Bauteil.

Diese Versiegelung der dem Glas abgewandten "Rückseite" des von der Glasschmelze einseitig beaufschlagten Metallteils mit einer insbesondere die H₂- oder H₂- und O₂-Durchlässigkeit herabsetzenden Schicht aus einem schmelzfluessigen, einem teilweise oder ganz auskristallisierten Material oder aus einem keramischen Material reduziert die Diffusion von Wasserstoff durch das Metallteil von der mit der Glasschmelze beaufschlagten Seite auf die Rückseite - der der Glasschmelze abgewandten Seite - des Metallteils. Andererseits verhindert die so erzeugte Versiegelung, dass der Luftsauerstoff der das Metallteil auf der Rückseite umgebenden Atmosphäre mit dem Metallteil in Berührung kommt und mit dem herausdiffundierenden Wasserstoff zu Wasser reagieren kann. Die Versiegelung sorgt mittelbar dafür, dass die der Wasserdissoziation zugrundeliegenden Elementarreaktionen, die in der Kontaktzone Glasschmelze/Metallteil ablaufen, einen Gleichgewichtszustand erreichen können. Dies liegt darin begründet, dass nach einer gewissen Anreicherung des Metallteiles mit Wasserstoff der Reaktionszone Glasschmelze/Metallteil kein weiterer Wasserstoff entzogen wird und die Wasserdissoziation zum Erliegen kommt.

Die Zusammensetzung des zum Beschichten des Edelmetallteils verwendeten Glases wird nach unterschiedlichen Gesichtspunkten ausgewählt. Grundsätzlich ist es besonders vorteilhaft, wenn die Zusammensetzung des beaufschlagten, zu verarbeitenden Glases und des zur Beschichtung und Abdichtung gegen Wasserstoffdiffusion verwendeten Glases gleich ist oder wenigstens eine ähnliche Zusammensetzung aufweist. Zu vermeiden sind Beschichtungsgläser, deren Basizität weit von dem zu verarbeitenden Glas abweicht. In diesem Fall können durch elektrochemische Effekte neue Blasen am Platin oder der Platinlegierung auftreten und ins Produkt gelangen.

Besonders geeignet sind Verfahrensvarianten, bei denen eine Schutzschicht angebracht wird, die elastisch ist. Im günstigsten Fall soll das Metallteil durch das erfindungsgemäße Verfahren hermetisch versiegelt werden. Dies ist durch eine elastische Schutzschicht, die in einem gewissen Rahmen thermischen Dehnungen und Stauchungen des sie tragenden Metallteils folgt, idealerweise verwirklicht.

Insbesondere bei den in der glasverarbeitenden Industrie eingesetzten Metallteilen sind häufige Temperaturänderungen und damit verbundene Wärmedehnungen anzunehmen. Der Auswahl des für die Schutzschicht verwendeten Materials kommt daher eine besondere Bedeutung zu, um die der Erfindung zugrunde liegende Aufgabe optimal zu lösen.

Vorteilhaft sind Verfahren, bei denen das mit einer Schutzschicht versehene Metallteil mit Keramik ausgekleidet wird oder das mit einer Schutzschicht beschichtete Metallteil mit einer keramischen Ausmauerung oder einer thermischen Isolierung umgeben wird.

Nach einer erfindungsgemäßen Variante werden für die Schutzschicht Glas, Glaslot, Kompositglas oder Glaskeramik verwendet, deren Liquidustemperatur über der Betriebstemperatur des zu beschichtenden Metallteils liegt.

Die kristallisierenden Schichten bestehen dann zunächst aus flüssigem Glas, dessen Liquidustemperatur wie erwähnt über der Betriebstemperatur des Metallteils liegt, so dass nach Tagen oder Wochen sich ein teilweise oder ganz auskristallisierter Glaskörper bildet, der dem beschichteten Metallteil zusätzliche Stabilität verleiht. Falls während des Betriebes eines derartig beschichteten oder umhüllten Metallteils in der Umhüllung durch mechanische Belastung oder andere Einflüsse Risse entstehen, können diese aufgrund der teilweise noch vorliegenden Glasphase in kurzer Zeit wieder ausheilen, so dass die angestrebte Gasundurchlässigkeit der Schutzschicht auf Dauer weitestgehend erhalten bleibt. Dabei legt sich die fließfähige Glasphase über die offenen Stellen der beschädigten Schutzschicht und heilt die Risse in der Schutzschicht wieder aus.

Das Material kann aber auch eine Liquidustemperatur unterhalb der Betriebstemperatur aufweisen, wobei in diesem Fall das Metallteil formstabil gehalten werden muss. Diese Variante hat den Vorteil, dass die Metallteile stets durch flüssiges Glas abgedichtet sind. Es muss aber gewährleistet sein, dass die flüssige Schutzschicht die eventuell mit ihr in direktem Kontakt stehende thermische Isolierung aus Keramik nicht so stark angreift, dass die Isolierwirkung und die stützende Funktion der Keramik beeinträchtigt werden. Dies kann durch geeignete Auswahl des Beschichtungs- und des Isoliermaterials vermieden werden.

Die Betriebstemperatur des zu beschichtenden Metallteils und die temperaturabhängigen Eigenschaften des die Schutzschicht bildenden Glases sind vorzugsweise aufeinander abzustimmen. Bei nicht im Betrieb befindlichen Bauteilen muss die Schutzschicht nicht unbedingt die idealerweise gasdichte, hermetische Versiegelung des Metallteils gewährleisten. Entscheidend ist lediglich, dass die aufgetragene Schutzschicht bei einem bestimmungsgemäßen Gebrauch des Bauteils oder gegebenenfalls durch eine zusätzlich vorgenommene Temperaturbehandlung die ihr zugrundegelegte erfindungsgemäße Aufgabe erfüllt und eine im wesentlichen gasdichte Schutzschicht ausbildet.

Empfehlenswert ist die Durchführung des Verfahrens, bei dem die aufgebrachte Schutzschicht mindestens eine Dicke von 0,02 mm aufweist und vorzugsweise zwischen 1 und 10 mm liegt. Zu bevorzugen sind Verfahrensvarianten, bei denen das eingesetzte Material eine Viskosität von 10 bis 10⁸ dPas aufweist, die vorzugsweise zwischen 10² und 10⁶ dPas liegt. Der Hintergrund dieses besonderen Verfahrensmerkmals ist, dass die Viskosität des Glases, in dem die Bildung von O₂-Blasen verhindert werden soll, in der Regel im Bereich von 10 bis 10⁸ dPas, vorzugsweise zwischen 10² und 10⁶ dPas, liegt und zum Versiegeln vorzugsweise Material mit derselben Viskosität zu wählen ist. Ein weiterer Grund ist darin zu sehen, dass das Beschichtungsmaterial weder zu flüssig noch zu zaeh sein darf. Zum einen muss das Metall von dem Glas, das die Beschichtung bildet, vollständig benetzt werden, wobei das Glas so flüssig sein soll, dass es zum Abdichten auf dem Metallteil verläuft und eine geschlossene Schutzschicht ausbildet. Zum anderen aber darf das Glas nicht zu dünnflüssig sein, so dass es durch Fugen und Spalten einer eventuell vorhandenen Isolierung hindurchtritt oder aufgrund seiner niedrigen Viskosität beispielsweise die eventuell vorhandene keramische Isolierung auflöst oder beschädigt.

Erfindungsgemäß werden sehr gute Ergebnisse bei der Verminderung der Blasenbildung erzielt, wenn für die H₂ oder H₂ und O₂ undurchlässige Schicht das gleiche Glas wie in der Schmelze verwendet wird, welche mit diesem Metallteil beheizt, transportiert, konditioniert oder zu einem fertigen Produkt verarbeitet oder geformt wird.

Empfehlenswert ist eine Verfahrensvariante, bei dem das zu beschichtende Metallteil auf der zu beschichtenden Seite so mit einer isolierenden Ummantelung versehen wird, dass sich ein Hohlraum oder Spalt zwischen der zu beschichtenden Oberfläche und der isolierenden Ummantelung ergibt und der so gebildete Hohlraum mit dem zur Beschichtung verwendeten Material gefüllt wird und durch Einbringen einer ausreichend hohen Temperatur das Material eingeschmolzen wird, wobei das dann viskos vorliegende Material die zu beschichtende Oberfläche vollständig benetzt und eine Schutzschicht bildet.

Als günstig erwiesen hat sich ein Verfahren, bei dem zwischen Isolierung und zu beschichtender Oberfläche ein Hohlraum gebildet wird, dessen Spalt eine Breite zwischen 1 und 10 mm aufweist. Die Breite dieses Spaltes kann einsatzbedingt auch breiter sein. Üblicherweise wird der Hohlraum mit Glasscherben oder Glasgrieß oder Glaspulver gefüllt, das bei ausreichend hoher Temperatur schmilzt und so das Metallteil von außen mit flüssigem Glas benetzt, das später ggf. auskristallisieren kann. Beim Einschmelzen werden Glasscherben oder Glasgrieß solange nachgefüllt bis der Hohlraum gefüllt und das Metallteil vollständig mit Glas benetzt ist.

Ein zweite Variante des erfindungsgemäßen Verfahrens ist dadurch gekennzeichnet, dass die Schutzschicht durch Flamm- oder Plasmaspritzen von keramischen Materialien, insbesondere Pulvem, mit oder ohne Glaspartikel, angebracht wird. Durch Einbau von Glaspartikeln werden die offenen Poren der keramischen Schicht verschlossen. Risse als Folge von Temperaturschwankung oder mechanischer Beanspruchung lassen sich wieder heilen.

Das bei diesem Verfahren für die Schutzschicht verwendete Material wird dem zu beschichtenden Material des Metallteils hinsichtlich seiner thermischen Ausdehnung nach Möglichkeit angepasst.

Weiterhin ist eine Verfahrensvariante zu nennen, bei der das Anbringen der Schutzschicht durch Aufstreichen einer pastösen Masse erfolgt, wobei diese pastöse Masse nach der Aufbringung auf die zu beschichtende Oberfläche einer Temperaturbehandlung unterzogen wird in der Art, dass sie so hoch erhitzt wird, bis sie eine glasige, im wesentlichen gasdichte Glasur ausbildet. Die so erzeugte Schutzschicht kann abhängig von der gewählten Zusammensetzung der pastösen Masse glasig und zaehfluessig bleiben oder teilweise oder vollständig auskristallisieren. Die pastöse Masse kann auch mit Glasgrieß oder -pulver gemischt werden, so dass sich nach einer Temperaturbehandlung eine Schicht aus Glas bildet.

Besonders empfehlenswert ist eine Verfahrensvariante, bei der ein für die Schutzschicht verwendeter Glasgrieß, welcher bevorzugt eine Korngröße < 1 mm aufweist, mit einer keramischen Vergussmasse gemischt wird und diese Mischung auf die zu beschichtende Oberfläche eines Metallteils aufgetragen wird. Dabei bildet die Vergussmasse ein festes Stützgerüst für das beschichtete Metallteil und der Glasgrieß übernimmt die abdichtende Funktion, indem er die Hohlräume füllt und die offenen Poren der keramischen Vergußmasse schließt. Vorzugsweise wird der für die Schutzschicht verwendete Glasgrieß mit der keramischen Vergussmasse in einem Verhältnis 20:1 bis 1:20, insbesondere 10:1 bis 1:10 gemischt.

Vorzugsweise kommen Glasarten in Frage, die die verwendete keramische Masse oder die Vergussmasse nicht angreifen und/oder aufschmelzen. Damit wird gewährleistet, dass die keramische Masse eine hinreichend große Festigkeit und Stützwirkung behält. Zu bevorzugen sind daher Glasarten mit nur geringem Anteil an Flussmitteln oder möglichst ohne Flussmittel. Zu Flussmitteln zählen in diesen Zusammenhang unter anderem Komponenten wie Fluor oder die Oxide von Bor und Alkalien.

Als Kontaktmaterial oder als Beimischung zu den Gläsern, die für die Beschichtung der Metallteile verwendet werden, sind diejenigen Keramikarten und feuerfesten Materialien besonders vorzuziehen, die als Auskleidung von Schmelzwannen eingesetzt werden. Diese Materialien widerstehen nicht nur den hohen Temperaturen, sondern auch dem Angriff durch geschmolzene Gläser in optimaler und größtmöglicher Weise. Ganz besonders eignen sich dafür keramische oder schmelzgegossene feuerfeste Materialien auf der Basis von SiO₂, ZrO₂ und Al₂O₃ allein oder Kombinationen davon. Schmelzgegossene feuerfeste Steine dieser Art sind z. B. als AZS oderals hoch zirkonhaltige Steine oder als Zirkonsilikat bekannt und im Handel. Es koennen auch MgO, CaO, P₂O₅, Fe₂O₃, TiO₂, Cr₂O₃ oder andere Komponenten enthalten sein. Insbesondere die schmelzgegossenen Materialien sind sehr dicht und frei von offenen Poren.

Dem Glasgrieß zum Auffüllen des Spalts zwischen Metallteil und Isolierung und zur H₂ oder H₂ und O₂ undurchlässigen Beschichtung können mehr oder weniger grob gemahlene Körner und Split aus diesen Materialien zugemischt werden, ohne Gefahr zu laufen, dass diese von dem Glas aufgelöst werden. Die festen keramischen oder schmelzgegossenen Bestandteile dieser Beschichtung geben dem beschichteten Metallteil Halt und Unterstützung, insbesondere dann, wenn die Korngrößenverteilung dieser festen Bestandteile so gewählt wird, dass der Durchmesser der größten Körner des Splits gerade so groß ist wie der Spalt zwischen Metallteil und Isolierung.
Einige erfindungsgemäße Beispiele für verwendete Materialien sind im folgenden tabellarisch zusammengestellt, wobei die Angaben Gewichtsprozent (Gew.-%) sind.

| | Glas 1 | Glas 2 | Glas 3 | Glas 4 | Glas 5 | Verguss masse 1 | Verguss masse 2 | Keramik 1 | Keramik2 | Keramik3 |
|---|---|---|---|---|---|---|---|---|---|---|
| SiO₂ | 60 | 61 | 81 | 75 | 69 | 0,5 | 100 | 64 | 15-100 | 1-100 |
| Al₂O₂ | 14 | 16,5 | 2 | 5,3 | 4 | 95 | - | 31 | 0-75 | 0-95 |
| B₂O₃ | 4,5 | 0,5 | 13 | 10,5 | 1 | - | - | - | - | - |
| BaO | 9 | 8 | - | 0,6 | 2 | - | - | - | - | - |
| CaO | 10 | 13 | - | 1,4 | 5 | 4 | - | - | <1 | - |
| MgO | 2,5 | <0,5 - | | - | 3 | - | - | 1 | 0-5 | - |
| ZrO₂ | - | 1 | - | - | - | - | - | - | - | 0-99 |
| ΣR₂O | <0,1 | <0,1 | 4 | 7 | 16 | 0,5 | - | 2 | 0-2 | - |
| P₂O₅ | - | - | - | - | - | - | - | - | - | 0-5 |
| Cr₂O₃ | - | - | - | - | - | - | - | - | - | 0-0,95 |
| TiO₂ | - | - | - | - | - | - | - | 1 | 0-2 | 0-3 |
| Fe₂O₃ - | | - | - | - | - | - | - | 1 | 0-2 | 0-3 |
| Fluor | - | - | - | 0,2 | - | - | - | - | - | - |

Die Viskosität des als Zusatz zur Keramik ausgewählten Glases ist vorzugsweise der Betriebstemperatur des zu beschichtenden Bauteils angepasst, so dass die zugemischten Glasbestandteile aufschmelzen, das Bauteil benetzen und eine sichere Dichtung gewährleisten.

Vorteilhaft sind Verfahren, bei denen eine für die Schutzschicht verwendete keramische Masse durch Zugabe von Glasscherben, Glasgrieß oder Glaspulver ergänzt und diese Mischung auf die zu beschichtende Oberfläche des zu beschichtenden Metallteils aufgetragen wird.

Bei einer weiteren Verfahrensvariante werden Glasscherben oder Glasgrieß mit Hilfe einer um das zu beschichtende Metallteil gewickelten keramischen Isolierfasermatte mit der zu beschichtenden Oberfläche in Kontakt gebracht, wobei die so zwischen Isoliermatte und zu beschichtende Oberfläche positionierten Glasscherben oder Glasgrieß durch Einbringen einer ausreichend hohen Temperatur zusammengesintert werden, aufschmelzen, das Metall benetzen und eine geschlossene Schutzschicht bilden.

Eine weitere Verfahrensvariante ist dadurch gekennzeichnet, dass zunächst eine poröse, oxidische Schicht durch ein thermisches Spritzverfahren aufgebracht und anschließend auf diese Schicht eine Paste aufgetragen wird, die mit bis zu 80 Gew.-% aus einem Glaspulver oder Glaskeramikpulver besteht, wobei durch Erhitzen des so beschichteten Bauteils auf Temperaturen oberhalb der Erweichungstemperatur des Glases oder Glaskeramikpulvers die offene Porosität im oberflächennahen Bereich der gespritzten Schicht mit Glas infiltriert und verschlossen wird.

Eine weitere Verfahrensvariante ist dadurch gekennzeichnet, dass eine oxidische Schicht durch Plasmaspritzen oder Flammenspritzen aufgebracht wird, wobei diese vorzugsweise eine Dicke von 20 µm bis 1000 µm aufweist und auf Basis von Aluminiumoxid, Zirkonoxid, Titanoxid oder eines Spinells besteht. Als günstig haben sich Verfahrensvarianten erwiesen, bei denen eine oxidische Schicht aufgetragen wird, die eine Porosität von 5% bis 20% aufweist und Verfahren, bei denen die zu beschichtende Oberfläche zur besseren Haftung der oxidischen Schicht zuvor gesandstrahlt oder kugelgestrahlt worden ist.

Erfindungsgemäß ist die Verwendung der beschichteten Metallteile in der Glasschmelze, Glastransportierung, Glaskonditionierung, Glashomogenisierung und Glasverarbeitung bzw. -formgebung.

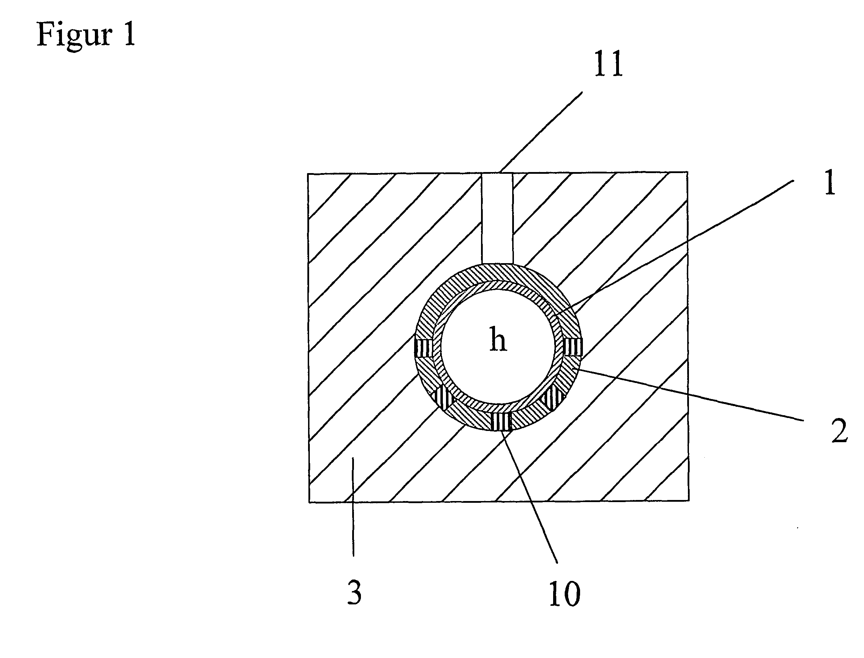

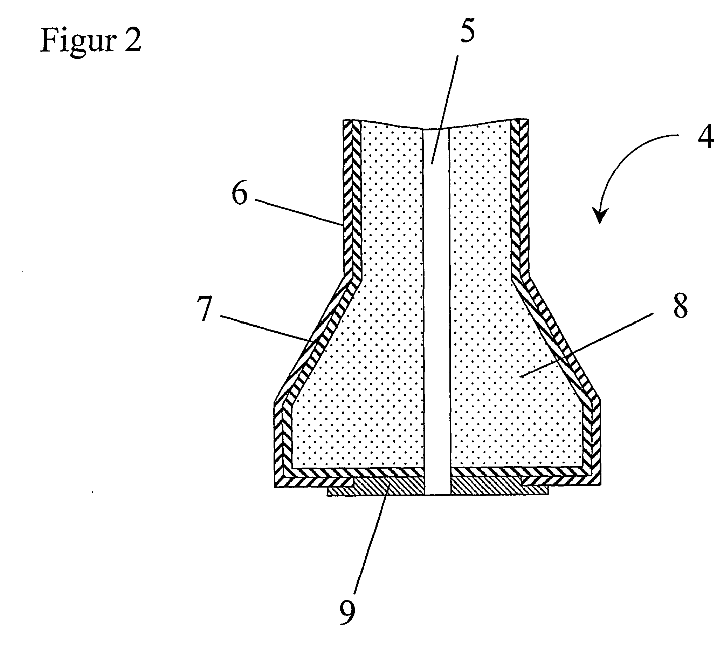

Die erfindungsgemäße Vorrichtung wird im folgenden anhand einer Zeichnung und Beispielen näher erläutert. Die Zeichnung besteht aus Figur 1 und Figur 2. Es zeigt:
- Figur 1: ein mit einer Schutzschicht versehenes glasführendes Platinrohr im Querschnitt, insbesondere einen Querschnitt durch eine Dannerrinne mit Stützelementen
- Figur 2: eine in Längsrichtung geschnittene Vellonadel

Figur 1 zeigt ein glasführendes Platinrohr (1) im Querschnitt. Das glasführende Platinrohr (1) ist vorzugsweise mit Hilfe einer der oben beschriebenen Verfahrensvarianten mit einer Schutzschicht (2), die einen Hohlraum (2') füllt, versehen worden. Das gesamte Bauteil bestehend aus dem glasführenden Platinrohr (1) und der auf ihm aufgetragenen Schutzschicht (2) ist in einer Isolierung aus keramischem Material (3) eingebettet. Diese Isolierung (3) besteht in der Regel aus einer Ausmauerung, die außer ihrer stützenden Funktion eine wärmedämmende Isolierung (3) bewirkt.

Es wird insbesondere eine Dannerrinne (1) mit Stützelementen (10) gezeigt. Die Dannerrinne (1) weist mehrere Stützelemente (10) auf. Die Stützelemente (10) sind zwischen der Dannerrinne (1) und der Isolierung (3) angebracht. Zwischen den Stützelementen (10) sind hinreichend große Öffnungen vorgesehen, damit Glas ungehindert fließen und Luft herausgedrückt werden kann. Die Stützelemente (10) können aus Metall oder Keramik bestehen. Schließlich wird eine Einfüllöffnung (11) für das zur Beschichtung verwendete Glas gezeigt.

Figur 2 zeigt eine Vellonadel (4) in einem Längsschnitt. Auf dem Schaft und dem Kern (8), in deren Mitte der Blasluftkanal (5) angeordnet ist, ist unter Anwendung einer der oben beschrieben Verfahrensvarianten eine im wesentlichen gasdichte Schutzschicht (7) aufgetragen worden, auf der wiederum die von konventionellen Vellonadel (4) bekannte Platinverkleidung (6) liegt. Die Vellonadel (4) ist ein Beispiel für ein von außen mit einer Glasschmelze beaufschlagtes Bauteil. Dementsprechend ist dieses Bauteil nicht - wie das in Figur 1 gezeigte glasführende Platinrohr (1) - mit einer Schutzschicht (2) auf der Außenseite versehen, sondern auf der Innenseite, die im Falle der Vellonadel (4) die der mit der Glasschmelze beaufschlagten Fläche abgewandte Seite darstellt und somit die zu beschichtende Seite ist. Die Vellonadel (4) ist an ihrem einen Ende mit einer Abdichtung (9) versehen, damit die mehr oder weniger viskos vorliegende Schutzschicht (7) nicht wegfließen kann.

Bei der Herstellung der Vellonadel (4) wird die Schutzschicht, wie bereits erwähnt, zunächst auf dem Schaft und dem Kern (8) aufgetragen. Hierbei muss in jedem Fall sichergestellt sein, dass die auf der Schutzschicht (7) aufliegende Platinverkleidung (6) nach einer Temperaturbehandlung oder im Betrieb der Vellonadel (4) von der Schutzschicht (7) benetzt und umgeben und somit im wesentlichen gasdicht versiegelt wird, indem die Schicht aufschmilzt oder die zum Benetzen der Platinverkleidung (6) erforderliche Fließeigenschaft hat.

### Beispiele

### Aufbau

In einer Dannerrinne aus einer Platinlegierung mit einem Durchmesser von 110 mm wurde Glas Nr. 4 (s. Tabelle) bei einer Temperatur von 1250 °C für den Rohrziehprozess konditioniert. Die Platinrinne war mit einer SiO₂-Keramik thermisch isoliert und in der Weise eingemauert, dass rings um das Platinrohr ein Spalt von ca. 1 cm bestand, wobei das Platinrohr in der unteren Hälfte mit vielen kleinen keramischen Abstandhaltern unterstützt war.

### Vergleichsbeispiel 1

### Platinrohr mit Luftzutritt

Die Außenseite des glasführenden Platinrohres war zunächst dem Luftzutritt ausgesetzt. Dabei stellte sich nach den qualitätsbedingten Sortierkriterien ein Produktionsausfall von ca. 40 % ein, der durch Blasen verursacht wurde. Um den Gasinhalt der Blasen bestimmen zu können, wurden am Auslauf der Dannerrinne Glasproben entnommen, die darin enthaltenen Blasen im Labor herausgeschnitten und in einem Gaschromatographen aufgebrochen. Die Zusammensetzung der in den Blasen enthaltenen Gase wurde bestimmt. Der Inhalt der meisten Blasen bestand aus reinem O₂. Dies ist ein eindeutiger Hinweis darauf, dass diese Blasen auf elektrochemischem Wege an der Grenzschicht Platin/Glasschmelze entstanden sind und nur wenige Minuten alt sein konnten. Andernfalls hätten noch andere Gase wie z. B. SO₂, N₂ oder CO₂ nachgewiesen werden müssen.

### Vergleichsbeispiel 2

### Platinrohr mit Wasserstoff

Durch Einleiten von einem schwachen Formiergas, bestehend aus N₂ und sehr wenig H₂, konnte, wie in US-A-5,785,726 beschrieben, die Bildung von O₂-haltigen Blasen in der Grenzschicht zum Platin wirksam unterdrückt werden. In Glasproben vom Auslauf der Dannerrinne konnten keine Blasen mehr nachgewiesen werden, die 100 % O₂ enthielten. Es wurden nur noch Blasen gefunden, deren Gasinhalt darauf hinwies, dass diese in der Schmelzwanne entstanden und bei der Läuterung nicht vollständig aus dem Glas ausgetrieben worden sind. Im wesentlichen enthielten diese Blasen SO₂, N₂ und CO₂. Der durch Blasen bedingte Produktionsausfall ging auf ein normales Maß von 3-5 % zurück.

Die Nachteile dieses Verfahrens bestehen darin, dass es weder wartungsfrei noch kostengünstig ist. Der H₂-Partialdruck im Spülgas muss durch Messung des Redoxpotentials am Platin permanent gemessen und über den H₂-Partialdruck im Spülgas geregelt werden. Andernfalls besteht die Gefahr, dass die O₂-reduzierende Wirkung im Glas zur Unterdrückung der elektrochemisch gebildeten O₂-Blasen nicht ausreicht oder dass durch Überreduktion das Platin beschädigt wird und versprödet, was den Neubau der Platin-Dannerrinne zur Folge hätte.

### Vergleichsbeispiel 3

### Platinrohr mit Wasserdampf

In einem zweiten Versuch wurde H₂O-dampfhaltige Luft durch den Spalt 2 (Fig. 1) zwischen Platin 1 und keramischer Isolierung 3 geleitet, wobei der Luftstrom durch einen Wasserbehälter, der auf 70 °C aufgeheizt war, geführt und dadurch mit Wasserdampf angereichert wurde. Mit diesem Verfahren konnte der durch Blasen bedingte Produktionsausfall auf etwa 5 % abgesenkt und die elektrochemische Bildung von O₂-Blasen wirkungsvoll unterdrückt werden. Das Verfahren hat aber wiederum den Nachteil, dass es nicht wartungsfrei ist und der H₂O-Partialdruck im Spülgas geregelt werden muss.

### Beispiel

### Platinrohr mit Glasbeschichtung

In einem dritten Versuch wurde an der selben Platin-Dannerrinne der Hohlraum um das Platinrohr zunächst mit Luft ohne Zugabe von H₂ oder H₂O-Dampf gespült. Es bildeten sich sofort wieder O₂-haltige Blasen an der Grenzschicht Platin/Glasschmelze, was zu einem schnellen Anstieg des durch Blasen bedingten Produktionsausfalls führte, gemäß Vergleichsbeispiel 1. Daraufhin wurde die Platin-Dannerrinne gemäß dieser Erfindung mit einer 1 cm dicken Glasschicht versiegelt. Die Beschichtung erfolgte durch Einfüllen von Scherben des Glases Nr. 4 durch mehrere Öffnungen in der keramischen Isolierung, die eigens dafür vorgesehen waren. Die Scherben schmolzen bei der Betriebstemperatur von 1250 °C sofort auf und die dabei entstehende Glasschmelze breitete sich in dem Hohlraum 2 zwischen dem Platinrohr und der keramischen Isolierung aus, wobei die Luft durch die Einfüllöffnung entwich. Es wurden so viele Scherben eingefüllt, bis der Hohlraum um das Platinrohr gefüllt und das Platinrohr auf der Außenseite vollständig mit Glas benetzt war und sich eine 1 cm dicke Glasschicht ausbildete. Der Produktionsausfall ging sofort auf 3 - 5% zurück, wobei dieses Niveau allein durch Blasen, die aus der Wanne verschleppt waren, bedingt war. Das hergestellte Glasprodukt wies wiederum keine O₂-haltigen Blasen auf, was durch die gaschromatographische Bestimmung des Gasinhalts einer repräsentativen Blasenanzahl nachgewiesen wurde.

Die so beschichtete Platin-Dannerrinne wurde über einen Zeitraum von zwei Wochen kontinuierlich betrieben. Damit konnte die zuverlässige Wirkung der Beschichtung eindeutig nachgewiesen werden.

Dieses Verfahren weist nicht mehr die Nachteile der beiden oben beschriebenen Methoden auf, bei denen mit einem schwachen Formiergas oder mit H₂O-Dampf angereicherter Luft gespült wurde. Der Vorteil der erfindungsgemäßen Vorrichtung ist, dass sie völlig wartungsfrei ist, keine Regelung benötigt, ungefährlich für das Platin ist, keine Betriebskosten verursacht und die Bildung von O₂-haltigen Blasen zuverlässig unterdrückt. Durch die 1 cm dicke Glasschicht, mit der das Platinrohr umgeben war, wurde die Diffusion von H₂ aus dem in der Platinrinne transportierten Glas durch das Platin hindurch unterbunden und die elektrochemische Dissoziation von Wasser im Glas wirksam unterdrückt. Die erfindungsgemäße Vorrichtung wird sehr vorteilhaft für das erfindungsgmäße Verfahren angewendet.

## Patentansprüche

1. Bereichsweise beschichtetes Edelmetallteil zur Verwendung in der Glasherstellung, bei der ein unbeschichteter Bereich des Edelmetallteiles mit einer Glasschmelze im Kontakt steht, das an der der Glasschmelze abgewandten Seite eine H₂ oder H₂ und O₂ undurchlässige Schicht aufweist, die
- eine Schichtdicke größer gleich 1 mm aufweist,
- temperaturbeständig ist,
- elastisch, flüssig oder fest ist, und
- mindestens ein Glas oder ein Glasgemisch, teilweise oder ganz auskristallisiertes oder keramisches Material enthält.

2. Beschichtetes Edelmetallteil nach Anspruch 1, wobei die H₂ oder H₂ und O₂ undurchlässige Schicht mindestens ein Glas mit der Zusammensetzung enthält:
| | |
|---|---|
| SiO₂ | 40 bis 99 Gew.-% |
| Al₂O₃ | 1 bis 30 Gew.-% |
| B₂O₃ | 0 bis 30 Gew.-% |
| BaO | 0 bis 15 Gew.-% |
| CaO | 0 bis 20 Gew.-% |
| MgO | 0 bis 8 Gew.-% |
| ZrO₂ | 0 bis 5 Gew.-% |
| Σ R₂O | 0 bis 25 Gew.-% |
| P₂O₅ | 0 bis 10 Gew.-% |
| Cr₂O₃ | 0 bis 3 Gew.-% |
| TiO₂ | 0 bis 10 Gew.-% |
| Fe₂O₃ | 0 bis 10 Gew.-% |
| ZnO | 0 bis 5 Gew.-% |
| MnO | 0 bis 10 Gew-% |
| SrO | 0 bis 10 Gew-% |
| PbO | 0 bis 70 Gew-% |
| Fluor | 0 bis 1 Gew.-% |
wobei Σ R₂O die Summe aller Alkalioxide, insbesondere die Summe aus Li₂O, Na₂O, K₂O, und Cs₂O ist.

3. Beschichtetes Edelmetallteil nach Anspruch 1 oder 2, wobei die H₂ oder H₂ und O₂ undurchlässige Schicht mindestens ein Glas, mit der Zusammensetzung enthält:
| | |
|---|---|
| SiO₂ | 55 bis 70 Gew.-% |
| Al₂O₃ | 10 bis 30 Gew.-% |
| B₂O₃ | 0 bis 15 Gew.-% |
| BaO | 5 bis 15 Gew.-% |
| CaO | 3 bis 15 Gew.-% |
| MgO | 0 bis 8 Gew.-% |
| SrO | 0 bis 10 Gew-% |
| ZrO₂ | 0 bis 2 Gew.-% |
| **Σ** R₂O | 0 bis 5 Gew.-% |
| P₂O₅ | 0 bis 10 Gew.-% |
| Cr₂O₃ | 0 bis 1 Gew.-% |
| TiO₂ | 0 bis 1 Gew.-% |
| Fe₂O₃ | 0 bis 1 Gew.-% |
| ZnO | 0 bis 1 Gew.-% |
wobei Σ R₂O die Summe aller Alkalioxide, insbesondere die Summe aus Li₂O, Na₂O, K₂O, und Cs₂O ist.

4. Beschichtetes Edelmetallteil nach Anspruch 1 oder 2, wobei die H₂ oder H₂ und O₂ undurchlässige Schicht mindestens ein Glas mit der Zusammensetzung enthält:
| | |
|---|---|
| SiO₂ | 70 bis 85 Gew.-% |
| Al₂O₃ | 1 bis 8 Gew.-% |
| B₂O₃ | 5 bis 25 Gew.-% |
| BaO | 0 bis 5 Gew.-% |
| CaO | 0 bis 3 Gew.-% |
| MgO | 0 bis 3 Gew.-% |
| ZrO₂ | 0 bis 2 Gew.-% |
| Σ R₂O | 3 bis 15 Gew.-% |
| P₂O₅ | 0 bis 2 Gew.-% |
| Cr₂O₃ | 0 bis 2 Gew.-% |
| TiO₂ | 0 bis 6 Gew.-% |
| MnO | 0 bis 6 Gew-% |
| Fe₂O₃ | 0 bis 5 Gew.-% |
| ZnO | 0 bis 2 Gew.-% |
| Fluor | 0 bis 0,5 Gew.-% |
wobei Σ R₂O die Summe aller Alkalioxide, insbesondere die Summe aus Li₂O, Na₂O, K₂O, und Cs₂O ist.

5. Beschichtetes Edelmetallteil nach Anspruch 1 oder 2, wobei die H₂ oder H₂ und O₂ undurchlässige Schicht mindestens ein Glas mit der Zusammensetzung enthält:
| | |
|---|---|
| SiO₂ | 65 bis 75 Gew.-% |
| Al₂O₃ | 2 bis 6 Gew.-% |
| B₂O₃ | 0 bis 3 Gew.-% |
| BaO | 0 bis 5 Gew.-% |
| CaO | 2 bis 7 Gew.-% |
| MgO | 0 bis 5 Gew.-% |
| ZrO₂ | 0 bis 1 Gew.-% |
| Σ R₂O | 10 bis 20 Gew.-% |
| P₂O₅ | 0 bis 5 Gew.-% |
| Cr₂O₃ | 0 bis 1 Gew.-% |
| TiO₂ | 0 bis 1 Gew.-% |
| Fe₂O₃ | 0 bis 5 Gew.-% |
| Fluor | 0 bis 1 Gew-% |
| ZnO | 0 bis 1 Gew.-% |
wobei Σ R₂O die Summe aller Alkalioxide, insbesondere die Summe aus Li₂O, Na₂O, K₂O, und Cs₂O ist.

6. Beschichtetes Edelmetallteil nach Anspruch 1 oder 2 wobei die H₂ oder H₂ und O₂ undurchlässige Schicht mindestens ein Glas mit der Zusammensetzung enthält:
| | |
|---|---|
| SiO₂ | 55 bis 75 Gew.-% |
| Al₂O₃ | 15 bis 25 Gew.-% |
| B₂O₃ | 0 bis 3 Gew.-% |
| BaO | 0 bis 5 Gew.-% |
| ZnO | 0 bis 3 Gew.-% |
| MgO | 0 bis 2 Gew.-% |
| ZrO₂ | 0 bis 3 Gew.-% |
| Σ R₂O | 1 bis 7 Gew.-% |
| P₂O₅ | 0 bis 5 Gew.-% |
| Cr₂O₃ | 0 bis 1 Gew.-% |
| TiO₂ | 0 bis 5 Gew.-% |
| Fe₂O₃ | 0 bis 5 Gew.-% |
wobei Σ R₂O die Summe aller Alkalioxide, insbesondere die Summe aus Li₂O, Na₂O, K₂O, und Cs₂O ist.

7. Beschichtetes Edelmetallteil nach mindestens einem der Ansprüche 1 bis 6, wobei die H₂ oder H₂ und O₂ undurchlässige Schicht aus dem gleichen Glas besteht, das mit Hilfe des Metallteils geschmolzen, transportiert, konditioniert oder verarbeitet wird.

8. Beschichtetes Edelmetallteil nach mindestens einem der Ansprüche 1 bis 7, wobei die H₂ oder H₂ und O₂ undurchlässige Schicht eine Dicke von 1 bis 10 mm aufweist.

9. Beschichtetes Edelmetallteil nach mindestens einem der Ansprüche 1 bis 8, wobei das für die H₂ oder H₂ und O₂ undurchlässige Schicht eingesetzte Material eine Viskosität von 10 bis 10⁸ dPas, bevorzugt 10² bis 10⁶ dPas aufweist.

10. Beschichtetes Edelmetallteil nach mindestens einem der Ansprüche 1 bis 9, wobei die H₂ oder H₂ und O₂ undurchlässige Schicht eine Zusammensetzung mit einem Glasgrieß mit einer Korngröße < 10 mm, bevorzugt < 1 mm und einer keramischen Masse enthält.

11. Beschichtetes Edelmetallteil nach mindestens einem der Ansprüche 1 bis 10, das mindestens ein Metall aus der Gruppe Rhodium, Iridium, Palladium oder Platin oder eine Legierung oder Verbindung mit mindestens einem dieser Metalle oder mit Gold oder feinkomstabilisierte Edelmetalle enthält.

12. Beschichtetes Edelmetallteil nach mindestens einem der Ansprüche 1 bis 11, wobei es eine Vorrichtung oder Einrichtung zum Konditionieren, Homogenisieren, Verteilen, Beheizen oder Formgeben von geschmolzenem Glas ist.

13. Beschichtetes Edelmetallteil nach mindestens einem der Ansprüche 1 bis 12, wobei es ein oder mehrere Stützelemente aufweist.

14. Beschichtetes Edelmetallteil nach mindestens einem der Ansprüche 1 bis 13, wobei das beschichtende Material Glasgrieß oder Glasscherben sowie Split und Körner aus Keramik oder schmelzgegossenes festes Material enthält.

15. Verfahren zum Beschichten von Edelmetallteilen in der Glasschmelze und Glasherstellung nach mindestens einem der Ansprüche 1 bis 14, bei dem das zu beschichtende Edelmetallteil auf der zu beschichtenden Seite mit einer isolierenden Ummantelung so versehen wird, dass ein Hohlraum zwischen der zu beschichtenden Oberfläche und der isolierenden Ummantelung entsteht, der Hohlraum mit dem zur Beschichtung verwendeten Material gefüllt wird und bei ausreichend hoher Temperatur das Material eingeschmolzen wird.

16. Verfahren zum Beschichten von Edelmetallteilen in der Glasschmelze, und Glasherstellung nach mindestens einem der Ansprüche 1 bis 14, bei dem Keramik aufgemahlen, mit Glasgrieß oder Glaspulver gemischt, zu einem Formteil verpresst und gesintert wird, das Edelmetallteil an der der Glasschmelze abgewandten Seite mit dem gesinterten Formteil verkleidet wird und bei einer ausreichend hohen Temperatur das der Keramik zugesetzte Glas-verflüssigt wird und das Edelmetallteil benetzt wird.

17. Verfahren zum Beschichten von Edelmetallteilen in der Glasschmelze und Glasherstellung nach mindestens einem der Ansprüche 1 bis 14, bei dem die Korngrößenverteilung von Split und Körnern aus Keramik oder schmelzgegossenem feuerfestem Material so gewählt wird, dass der Durchmesser der größten Körner so groß wie der Durchmesser des Hohlraums zwischen der zu beschichtenden Oberfläche und der isolierenden Ummantelung ist.

18. Verwendung der beschichteten Edelmetallteile nach mindestens einem der Ansprüche 1 bis 14 in der Glasschmelze, Glastransportierung, Glaskonditionierung, Glashomogenisierung und Glasverarbeitung.

19. Verwendung der beschichteten Edelmetallteile nach mindestens einem der Ansprüche 1 bis 14 zur Herstellung von Vorrichtungen und Einrichtungen aus Edelmetallteilen zum Konditionieren, Homogenisieren, Verteilen, Beheizen und Formgeben von geschmolzenem Glas.

## Claims

1. Precious metal part which is coated in regions for use in glass making, wherein an uncoated region of the precious metal part is in contact with a glass melt and on the side remote from the glass melt has a layer which is impermeable to H₂ or H₂ and O₂, which layer
- has a layer thickness of greater than or equal to 1mm,
- is thermally stable,
- is elastic, liquid or solid, and
- contains at least one glass or a glass mixture, partly or fully crystallized or ceramic material.

2. Coated precious metal part according to Claim 1, wherein the layer which is impermeable to H₂ or H₂ and O₂ contains at least one glass having the following composition:
| | |
|---|---|
| SiO₂ | 40 to 99% by weight |
| Al₂O₃ | 1 to 30% by weight |
| B₂O₃ | 0 to 30% by weight |
| BaO | 0 to 15% by weight |
| CaO | 0 to 20% by weight |
| MgO | 0 to 8% by weight |
| ZrO₂ | 0 to 5% by weight |
| Σ R₂O | 0 to 25% by weight |
| P₂O₅ | 0 to 10% by weight |
| Cr₂O₃ | 0 to 3% by weight |
| TiO₂ | 0 to 10% by weight |
| Fe₂O₃ | 0 to 10% by weight |
| ZnO | 0 to 5% by weight |
| MnO | 0 to 10% by weight |
| SrO | 0 to 10% by weight |
| PbO | 0 to 70% by weight |
| Fluorine | 0 to 1% by weight |
where Σ R₂O is the sum of all alkali metal oxides, in particular the sum of Li₂O, Na₂O, K₂O and Cs₂O.

3. Coated precious metal part according to Claim 1 or 2, wherein the layer which is impermeable to H₂ or H₂ and O₂ contains at least one glass having the composition:
| | |
|---|---|
| SiO₂ | 55 to 70% by weight |
| Al₂O₃ | 10 to 30% by weight |
| B₂O₃ | 0 to 15% by weight |
| BaO | 5 to 15% by weight |
| CaO | 3 to 15% by weight |
| MgO | 0 to 8% by weight |
| SrO | 0 to 10% by weight |
| ZrO₂ | 0 to 2% by weight |
| Σ R₂O | 0 to 5% by weight |
| P₂O₅ | 0 to 10% by weight |
| Cr₂O₃ | 0 to 1% by weight |
| TiO₂ | 0 to 1% by weight |
| Fe₂O₃ | 0 to 1% by weight |
| ZnO | 0 to 1% by weight |
where Σ R₂O is the sum of all alkali metal oxides, in particular the sum of Li₂O, Na₂O, K₂O and Cs₂O.

4. Coated precious metal part according to Claim 1 or 2, wherein the layer which is impermeable to H₂ or H₂ and O₂ contains at least one glass having the composition:
| | |
|---|---|
| SiO₂ | 70 to 85% by weight |
| Al₂O₃ | 1 to 8% by weight |
| B₂O₃ | 5 to 25% by weight |
| BaO | 0 to 5% by weight |
| CaO | 0 to 3% by weight |
| MgO | 0 to 3% by weight |
| ZrO₂ | 0 to 2% by weight |
| Σ R₂O | 3 to 15% by weight |
| P₂O₅ | 0 to 2% by weight |
| Cr₂O₃ | 0 to 2% by weight |
| TiO₂ | 0 to 6% by weight |
| MnO | 0 to 6% by weight |
| Fe₂O₃ | 0 to 5% by weight |
| ZnO | 0 to 2% by weight |
| Fluorine | 0 to 0.5% by weight |
where Σ R₂O is the sum of all alkali metal oxides, in particular the sum of Li₂O, Na₂O, K₂O and Cs₂O.

5. Coated precious metal part according to Claim 1 or 2, wherein the layer which is impermeable to H₂ or H₂ and O₂ contains at least one glass having the composition:
| | |
|---|---|
| SiO₂ | 65 to 75% by weight |
| Al₂O₃ | 2 to 6% by weight |
| B₂O₃ | 0 to 3% by weight |
| BaO | 0 to 5% by weight |
| CaO | 2 to 7% by weight |
| MgO | 0 to 5% by weight |
| ZrO₂ | 0 to 1% by weight |
| Σ R₂O | 10 to 20% by weight |
| P₂O₅ | 0 to 5% by weight |
| Cr₂O₃ | 0 to 1% by weight |
| TiO₂ | 0 to 1% by weight |
| Fe₂O₃ | 0 to 5% by weight |
| Fluorine | 0 to 1% by weight |
| ZnO | 0 to 1% by weight |
where Σ R₂O is the sum of all alkali metal oxides, in particular the sum of Li₂O, Na₂O, K₂O and Cs₂O.

6. Coated precious metal part according to Claim 1 or 2, wherein the layer which is impermeable to H₂ or H₂ and O₂ contains at least one glass having the composition:
| | |
|---|---|
| SiO₂ | 55 to 75% by weight |
| Al₂O₃ | 15 to 25% by weight |
| B₂O₃ | 0 to 3% by weight |
| BaO | 0 to 5% by weight |
| ZnO | 0 to 3% by weight |
| MgO | 0 to 2% by weight |
| ZrO₂ | 0 to 3% by weight |
| Σ R₂O | 1 to 7% by weight |
| P₂O₅ | 0 to 5% by weight |
| Cr₂O₃ | 0 to 1% by weight |
| TiO₂ | 0 to 5% by weight |
| Fe₂O₃ | 0 to 5% by weight |
where Σ R₂O is the sum of all alkali metal oxides, in particular the sum of Li₂O, Na₂O, K₂O and Cs₂O.

7. Coated precious metal part according to at least one of Claims 1 to 6, wherein the layer which is impermeable to H₂ or H₂ and O₂ consists of the same glass which is being melted, transported, conditioned or processed with the aid of the metal part.

8. Coated precious metal part according to at least one of Claims 1 to 7, wherein the layer which is impermeable to H₂ or H₂ and O₂ has a thickness of from 1 to 10 mm.

9. Coated precious metal part according to at least one of Claims 1 to 8, wherein the material used for the layer which is impermeable to H₂ or H₂ and O₂ has a viscosity of from 10 to 10⁸ dPas, preferably 10² to 10⁸ dPas.

10. Coated precious metal part according to at least one of Claims 1 to 9, wherein the layer which is impermeable to H₂ or H₂ and O₂ contains a composition comprising a glass grit with a grain size of < 10 mm, preferably < 1 mm and a ceramic compound.

11. Coated precious metal part according to at least one of Claims 1 to 10, which contains at least one metal selected from the group consisting of rhodium, iridium, palladium or platinum or an alloy or compound comprising at least one of these metals or with gold or contains fine-grain-stabilized precious metals.

12. Coated precious metal part according to at least one of Claims 1 to 11, which is an apparatus or device for conditioning, homogenizing, distributing, heating or shaping molten glass.

13. Coated precious metal part according to at least one of Claims 1 to 12, which has one or more supporting elements.

14. Coated precious metal part according to at least one of Claims 1 to 13, wherein the coating material contains glass grit or glass cullet as well as chips and grains of ceramic or fused-cast solid material.

15. Process for coating precious metal parts used in glass melting and glass making according to at least one of Claims 1 to 14, in which the precious metal part that is to be coated is provided, on the side which is to be coated, with an insulating cladding, in such a way that a cavity is formed between the surface that is to be coated and the insulating cladding, the cavity is filled with the material used for the coating and the material is melted at sufficiently high temperature.

16. Process for coating precious metal parts used in glass melting and glass making according to at least one of Claims 1 to 14, in which ceramic is milled, mixed with glass grit or glass powder, pressed to form a shaped part and sintered, the precious metal part is lined with the sintered shaped part on the side remote from the glass melt and the glass added to the ceramic is liquefied at a sufficiently high temperature and then the precious metal part is wetted.

17. Process for coating precious metal parts used in glass melting and glass making according to at least one of Claims 1 to 14, in which the grain size distribution of chips and grains of ceramic or fused-cast refractory material is selected in such a way that the diameter of the largest grains is equal to the diameter of the cavity between the surface that is to be coated and the insulating cladding.

18. Use of the coated precious metal parts according to at least one of Claims 1 to 14 in glass melting, glass transporting, glass conditioning, glass homogenization and glass processing.

19. Use of the coated precious metal parts according to at least one of Claims 1 to 14 for the production of apparatuses and devices from precious metal parts for the conditioning, homogenization, distribution, heating and shaping of molten glass.

## Revendications

1. Pièce partiellement revêtue en métal noble destinée à être utilisée dans la fabrication du verre dans laquelle une zone non revêtue de la pièce en métal noble est en contact avec une masse fondue de verre, qui présente sur le côté opposé à la masse fondue de verre une couche imperméable à H₂ ou à H₂ et à O₂, qui
- présente une épaisseur de couche supérieure à 1 mm,
- est résistante à la température,
- est élastique, liquide ou solide et
- qui contient au moins un verre ou un mélange de verres ou un matériau partiellement ou totalement cristallisé ou céramique.

2. Pièce revêtue en métal noble selon la revendication 1, la couche imperméable à H₂ ou à H₂ et à O₂ contenant au moins un verre présentant la composition :
| | |
|---|---|
| SiO₂ | 40 à 99% en poids |
| Al₂O₃ | 1 à 30% en poids |
| B₂O₃ | 0 à 30% en poids |
| BaO | 0 à 15% en poids |
| CaO | 0 à 20% en poids |
| MgO | 0 à 8% en poids |
| ZrO₂ | 0 à 5% en poids |
| Σ R₂O | 0 à 25% en poids |
| P₂O₅ | 0 à 10% en poids |
| Cr₂O₃ | 0 à 3% en poids |
| TiO₂ | 0 à 10% en poids |
| Fe₂O₃ | 0 à 10% en poids |
| ZnO | 0 à 5% en poids |
| MnO | 0 à 10% en poids |
| SrO | 0 à 10% en poids |
| PbO | 0 à 70% en poids |
| Fluor | 0 à 1% en poids |
où Σ R₂O représente la somme de tous les oxydes de métal alcalin, en particulier la somme de Li₂O, Na₂O, K₂O, et Cs₂O.

3. Pièce revêtue en métal noble selon la revendication 1 ou 2, la couche imperméable à H₂ ou à H₂ et à O₂ contenant au moins un verre présentant la composition :
| | |
|---|---|
| SiO₂ | 55 à 70% en poids |
| Al₂O₃ | 10 à 30% en poids |
| B₂O₃ | 0 à 15% en poids |
| BaO | 5 à 15% en poids |
| CaO | 3 à 15% en poids |
| MgO | O à 8% en poids |
| SrO | 0 à 10% en poids |
| ZrO₂ | 0 à 2% en poids |
| Σ R₂O | 0 à 5% en poids |
| P₂O₅ | 0 à 10% en poids |
| Cr₂O₃ | 0 à 1% en poids |
| TiO₂ | 0 à 1% en poids |
| Fe₂O₃ | 0 à 1% en poids |
| ZnO | 0 à 1% en poids |
où Σ R₂O représente la somme de tous les oxydes de métal alcalin, en particulier la somme de Li₂O, Na₂O, K₂O, et C_{S2}O.

4. Pièce revêtue en métal noble selon la revendication 1 ou 2, la couche imperméable à H₂ ou à H₂ et à O₂ contenant au moins un verre présentant la composition :
| | |
|---|---|
| SiO₂ | 70 à 85% en poids |
| Al₂O₃ | 1 à 8% en poids |
| B₂O₃ | 5 à 25% en poids |
| BaO | 0 à 5% en poids |
| CaO | 0 à 3% en poids |
| MgO | 0 à 3% en poids |
| ZrO₂ | 0 à 2% en poids |
| Σ R₂O | 3 à 15% en poids |
| P₂O₅ | 0 à 2% en poids |
| Cr₂O₃ | 0 à 2% en poids |
| TiO₂ | 0 à 6% en poids |
| MnO | 0 à 6% en poids |
| Fe₂O₃ | 0 à 5% en poids |
| ZnO | 0 à 2% en poids |
| Fluor | 0 à 0,5% en poids |
où Σ R₂O représente la somme de tous les oxydes de métal alcalin, en particulier la somme de Li₂O, Na₂O, K₂O, et Cs₂O.

5. Pièce revêtue en métal noble selon la revendication 1 ou 2, la couche imperméable à H₂ ou à H₂ et à O₂ contenant au moins un verre présentant la composition :
| | |
|---|---|
| SiO₂ | 65 à 75% en poids |
| Al₂O₃ | 2 à 6% en poids |
| B₂O₃ | 0 à 3% en poids |
| BaO | 0 à 5% en poids |
| CaO | 2 à 7% en poids |
| MgO | 0 à 5% en poids |
| ZrO₂ | 0 à 1% en poids |
| Σ R₂O | 10 à 20% en poids |
| P₂O₅ | 0 à 5% en poids |
| Cr₂O₃ | 0 à 1% en poids |
| TiO₂ | 0 à 1% en poids |
| Fe₂O₃ | 0 à 5% en poids |
| Fluor | 0 à 1% en poids |
| ZnO | 0 à 1% en poids |
où Σ R₂O représente la somme de tous les oxydes de métal alcalin, en particulier la somme de Li₂O, Na₂O, K₂O, et Cs₂O.

6. Pièce revêtue en métal noble selon la revendication 1 ou 2, la couche imperméable à H₂ ou à H₂ et à O₂ contenant au moins un verre présentant la composition :
| | |
|---|---|
| SiO₂ | 55 à 75% en poids |
| Al₂O₃ | 15 à 25% en poids |
| B₂O₃ | 0 à 3% en poids |
| BaO | 0 à 5% en poids |
| ZnO | 0 à 3% en poids |
| MgO | 0 à 2% en poids |
| ZrO₂ | 0 à 3% en poids |
| Σ R₂O | 1 à 7% en poids |
| P₂O₅ | 0 à 5% en poids |
| Cr₂O₃ 0 | à 1% en poids |
| TiO₂ | 0 à 5% en poids |
| Fe₂O₃ | 0 à 5% en poids |
où Σ R₂O représente la somme de tous les oxydes de métal alcalin, en particulier la somme de Li₂O, Na₂O, K₂O, et Cs₂O.

7. Pièce revêtue en métal noble selon au moins l'une quelconque des revendications 1 à 6, la couche imperméable à H₂ ou à H₂ et à O₂ étant constituée par le même verre qui est fondu, transporté, conditionné ou transformé à l'aide de la pièce métallique.

8. Pièce revêtue en métal noble selon au moins l'une quelconque des revendications 1 à 7, la couche imperméable à H₂ ou à H₂ et à O₂ présentant une épaisseur de 1 à 10 mm.

9. Pièce revêtue en métal noble selon au moins l'une quelconque des revendications 1 à 8, le matériau utilisé pour la couche imperméable à H₂ ou à H₂ et à O₂ présentant une viscosité de 10 à 10⁸ dPa.s, de préférence de 10² à 10⁶ dPa.s.

10. Pièce revêtue en métal noble selon au moins l'une quelconque des revendications 1 à 9, la couche imperméable à H₂ ou à H₂ et à O₂ contenant une composition- avec un granulat de verre présentant une grosseur de granule <10 mm, de préférence <1 mm et une masse céramique.

11. Pièce revêtue en métal noble selon au moins l'une quelconque des revendications 1 à 10, qui contient au moins un métal du groupe formé par le rhodium, l'iridium, le palladium ou le platine ou un alliage ou un composé avec au moins un de ces métaux ou avec de l'or ou des métaux nobles à granules fins stabilisés.

12. Pièce revêtue en métal noble selon au moins l'une quelconque des revendications 1 à 11, où il s'agit d'un dispositif ou d'un équipement pour le conditionnement, l'homogénéisation, la répartition, le chauffage ou le façonnage de verre fondu.

13. Pièce revêtue en métal noble selon au moins l'une quelconque des revendications 1 à 12, où elle présente plusieurs éléments d'appui.

14. Pièce revêtue en métal noble selon au moins l'une quelconque des revendications 1 à 13, le matériau revêtu contenant un granulat de verre ou des tessons de verre ainsi que des éclats et des granules de céramique ou de matériau solide coulé à partir d'une masse fondue.

15. Procédé pour le revêtement de pièces en métal noble dans la masse fondue de verre et la production de verre selon au moins l'une quelconque des revendications 1 à 14, dans lequel la pièce en métal noble à revêtir est pourvue sur la face à revêtir d'un enrobage isolant de telle manière qu'il se forme un espace creux entre la surface à revêtir et l'enrobage isolant, l'espace creux est rempli du matériau utilisé pour le revêtement et le matériau est fondu à une température suffisamment élevée.

16. Procédé pour le revêtement des pièces en métal noble dans la masse fondue de verre et la production de verre selon au moins l'une quelconque des revendications 1 à 14, dans lequel de la céramique est broyée, mélangée avec un granulat de verre ou de la poudre de verre, pressée en une pièce façonnée et frittée, la pièce en métal noble est habillée sur la face opposée à la masse fondue de verre de la pièce façonnée frittée et le verre ajouté à la céramique est liquéfié à une température suffisamment élevée et la pièce en métal noble est mouillée.

17. Procédé pour le revêtement de pièces en métal noble dans la masse fondue de verre et la production de verre selon au moins l'une quelconque des revendications 1 à 14, dans lequel la répartition granulométrique des éclats et granules en céramique ou en matériau réfractaire coulé à partir d'une masse fondue est choisie de telle manière que le diamètre des plus gros granules est aussi grand que le diamètre de l'espace creux entre la surface à revêtir et l'enrobage isolant.

18. Utilisation des pièces revêtues en métal noble selon au moins l'une quelconque des revendications 1 à 14 dans la fusion du verre, le transport du verre, le conditionnement du verre, l'homogénéisation du verre et la transformation du verre.

19. Utilisation des pièces revêtues en métal noble selon au moins l'une quelconque des revendications 1 à 14 pour la réalisation de dispositifs et d'équipements en pièces en métal noble destinés au conditionnement, à l'homogénéisation, à la répartition, au chauffage et au façonnage de verre fondu.
